# EUROPEAN PATENT APPLICATION

(11) **EP 3 453 902 A1**
(43) Date of publication of application: **13.03.2019**
(21) Application number: 18192790.6
(22) Date of filing: 05.09.2018
(51) Int. Cl.: F16C 17/03, F16C 17/06, F16C 17/10, F16C 17/26, F16C 32/06, F16C 33/10, F16C 37/00, F16C 17/24

(54) **BEARING ASSEMBLY**

(30) Priority: 06.09.2017 US 201762554770 P; 28.08.2018 US 201816114597
(71) Applicant: Air Products and Chemicals, Inc., Allentown, PA 18195-1501 (US)
(72) Inventor: Rajendran, Muthusamy, 06002 Bloomfield, CT (IN); Eiswerth, Ethan Douglas, Macungie, PA 18062 (US)
(74) Representative: Kador & Partner PartG mbB

(57) **Abstract**

A bearing assembly comprising a bearing shell, thrust bearing pads, and journal bearing pads, where the thrust bearing pads and/or the journal bearing pads have through-pad lubricating gas distributors comprising at least one of a porous layer having connected-through porosity, a dense layer having a plurality of at least six orifices defined therethrough, or a porous layer having connected-through porosity having a plurality of at least six orifices defined therethrough.

## Description

### CROSS-REFERENCE TO RELATED APPLICATIONS

This patent application claims priority from Provisional Application Ser. No. 62/554770, titled "Bearing Assembly", filed on September 6, 2017, the contents of which are hereby incorporated by reference.

### BACKGROUND

The present disclosure relates to externally pressurized, gas lubricated, journal and thrust bearing assemblies suitable for high load capacity and high speed operation. Externally pressurized gas bearings have not gained wide acceptance for industrial rotating machinery due to their poor load capacity and frequent failures due to instabilities at high speeds.

Bearing assemblies are used in industrial rotating machinery such as expanders, compressors, fans, blowers, electric motors/generators, and gas turbine engines operating at high loads, high speeds, and with large thermal gradients. All industrial rotating machines require journal bearings to handle the radial loads of the rotating shaft and thrust bearings to handle the thrust loads of the rotating shaft. Traditionally, industrial rotating machinery shafts have been supported by ball bearings or oil bearings. The power of such rotating machinery can vary, for example, from 7.5 kW (10 horsepower) to over 7.5 MW (10,000 horsepower).

Rotating machinery, such as expanders, compressors, and gas turbine engines have evolved from slow speed, lightly loaded machines to higher speed, more heavily loaded machines. Operating rotating machinery at higher speed and higher loads enables improvements in process efficiency as well as reduces overall machine size resulting in lower cost. As the speed of the machines has increased, the shaft bearing systems doing the work have had to evolve to overcome unique problems such as rotor instability and low load carrying capability.

Large rotating machinery typically uses oil bearings to handle high speed rotors because oil has very high damping capability, which is beneficial to combat stability problems. One drawback to the use of oil bearings is the requirement for an expensive lube oil supply system to provide cool, filtered, pressurized oil lubrication to the bearings. Further, oil bearing machines are complicated by the typical requirement to isolate the oil from the process stream by the use of special seals, which can add considerable cost. Oil also has a very limited useful operating temperature range of about 50°F to 250°F due to the drastic change in viscosity at lower temperatures and coking due to the breakdown of oil molecules at higher temperatures.

Industry desires to avoid these issues with oil bearings while maintaining sufficient damping capability.

In order to overcome oil bearing limitations, active research has been performed in the field of gas bearing development over the past 70 years. Typically, gas bearings have been limited to small turbomachine applications (i.e. 750 W (1 hp) to 225 kW (300 hp)) such as turbo-blowers, air cycle machines, micro turbines, and small auxiliary power units.

Gas bearing assemblies, though successfully implemented in the small turbomachinery field, could not break through into large industrial rotating machinery market due to their limited load capacity and loss of rotor stability at high operating speeds.

Gas bearings can typically be categorized as self-generating bearings or externally pressurized bearings.

Self-generating bearings work by the hydrodynamic principle where the shaft motion generates a self-sustaining gas film which is used to carry the loads on the shaft at high speed. The self-generating gas bearings, though highly stable, lack load capacity because the self-generating gas films rely upon gas viscosity to generate the load carrying pressure profile, which is very weak.

Externally pressurized bearings require a pressurized gas source supplied through ports into the machine to the bearing which generates a pressure profile on the bearing pad to carry shaft loads. Externally pressurized gas bearings theoretically can have enormous load capacity by simply increasing the pressure of the supplied gas. Despite of this advantage, externally pressurized gas bearings are seldom used in small turbomachinery applications and almost never in large industrial size rotating machinery due to their inherent stability issues due to lack of damping by the gas film.

Industry desires gas bearing assemblies that have high load capacity and rotor stability at high operating speeds.

Industry desires a wider operational temperature range, for example from -185°C (-300°F) to 650°C (1200°F).

Industry desires low bearing power loss.

Industry desires elimination of the lube oil system that is required for oil bearings.

Industry desires elimination of potential process gas contamination due to lube oil ingress.

Industry desires simplified bearing assemblies.

Industry desires bearing assemblies that are easy to operate.

Industry desires bearing assemblies with low maintenance requirements and associated maintenance costs.

Industry desires improved reliability of shaft bearing assemblies for industrial rotating machinery.

Externally pressurized gas bearings that can handle the loads of large industrial rotating machinery without encountering instability are particularly desirable.

### BRIEF SUMMARY

The present invention relates to a bearing assembly. The bearing assembly is an improved design where the technical limitation of externally pressurized gas bearings is eliminated by a self-adjusting design which enables application of the technology for large industrial rotating machinery that handles high loads at high operating speeds.

There are several aspects of the invention as outlined below. In the following, specific aspects of the invention are outlined below. The reference numbers and expressions set in parentheses are referring to an example embodiment explained further below with reference to the figures. The reference numbers and expressions are, however, only illustrative and do not limit the aspect to any specific component or feature of the example embodiment. The aspects can be formulated as claims in which the reference numbers and expressions set in parentheses are omitted or replaced by others as appropriate.
Aspect 1. A bearing assembly (10) comprising:
   a bearing shell (11);
   a plurality of at least three thrust bearing pads (12), the plurality of at least three thrust bearing pads (12) housed on a shaft thrust runner-facing side of the bearing shell (11), wherein each of the plurality of at least three thrust bearing pads (12) has a shaft thrust runner-facing side and a bearing shell-facing side;
   a plurality of at least three journal bearing pads (23) housed within the bearing shell (11), wherein each of the plurality of at least three journal bearing pads (23) has a shaft journal-facing side and a bearing shell-facing side;
   wherein the bearing shell (11) comprises one or more lubricating gas inlet ports (20, 33); and
   wherein (i) each thrust bearing pad (12) of the plurality of at least three thrust bearing pads (12) comprises through-pad lubricating gas distributors (13) disposed on the shaft thrust runner-facing side of each respective thrust bearing pad, the through-pad lubricating gas distributors operatively connected to at least one of the one or more lubricating gas inlet ports (20) and/or (ii) each journal bearing pad (23) of the plurality of at least three journal bearing pads (23) comprises through-pad lubricating gas distributors (24) disposed on the shaft journal-facing side of each respective journal bearing pad, the through-pad lubricating gas distributors operatively connected to at least one of the one or more lubricating gas inlet ports (33),
   wherein the through-pad lubricating gas distributors (13, 24) comprise at least one of (i) a porous layer having connected-through porosity, (ii) a dense layer having a plurality of at least six orifices defined therethrough, or (iii) a porous layer having connected-through porosity and having a plurality of at least six orifices defined therethrough.
Aspect 2. The bearing assembly (10) according to aspect 1 wherein the plurality of at least three thrust bearing pads (12) each comprise through-pad lubricating gas distributors (13), wherein the one or more lubricating gas inlet ports comprise a lubricating gas inlet port operatively connected to the plurality of at least three thrust bearing pads, the bearing assembly further comprising:
   a regulator associated with the at least one of the one or more lubricating gas inlet ports operatively connected to the plurality of at least three thrust bearing pads for flow and/or pressure (i.e. (i) flow, (ii) pressure, or (iii) flow and pressure) control of lubricating gas to the plurality of at least three thrust bearing pads.
Aspect 3. The bearing assembly (10) according to aspect 2 further comprising
   a thrust bearing pad gap sensor (21) operatively disposed to sense a measure of a gap between a first thrust bearing pad of the plurality of at least three thrust bearing pads and a shaft thrust runner (38); and
   a display in signal communication with the thrust bearing pad gap sensor (21), the display operatively disposed to receive signals from the thrust bearing pad gap sensor (21) and display values representative of the measure of the gap responsive to the signals from the thrust bearing pad gap sensor (21).
Aspect 4. The bearing assembly (10) according to aspect 2 further comprising
   a thrust bearing pad gap sensor (21) operatively disposed to sense a measure of a gap between a first thrust bearing pad of the plurality of at least three thrust bearing pads and a shaft thrust runner; and
   a controller in signal communication with the thrust bearing pad gap sensor (21) and operatively disposed to receive signals from the thrust bearing pad gap sensor (21), the controller operatively configured to control the regulator associated with the lubricating gas inlet port operatively connected to the plurality of at least three thrust bearing pads for flow and/or pressure control of lubricating gas to the plurality of at least three thrust bearing pads responsive to signals from the thrust bearing pad gap sensor (21).
Aspect 5. The bearing assembly (10) according to any one of aspects 1 to 4 wherein the plurality of at least three journal bearing pads each comprise through-pad lubricating gas distributors, wherein the one or more lubricating gas inlet ports comprise a lubricating gas inlet port operatively connected to the plurality of at least three journal bearing pads, the bearing assembly further comprising:
   a regulator associated with the lubricating gas inlet port operatively connected to the plurality of at least three journal bearing pads for flow and/or pressure (i.e. (i) flow, (ii) pressure, or (iii) flow and pressure) control of lubricating gas to the plurality of at least three journal bearing pads.
Aspect 6. The bearing assembly (10) according to aspect 5 further comprising
   a journal bearing pad gap sensor (34) operatively disposed to sense a measure of a gap between a first journal bearing pad of the plurality of at least three journal bearing pads and a shaft journal (and transmit signals); and
   a display in signal communication with the journal bearing pad gap sensor (34), the display operatively disposed to receive signals from the journal bearing pad gap sensor (34) and display values representative of the measure of the gap responsive to the signals from the journal bearing pad gap sensor (34).
Aspect 7. The bearing assembly (10) according to aspect 5 further comprising
   a journal bearing pad gap sensor (34) operatively disposed to sense a measure of a gap between a first journal bearing pad of the plurality of at least three journal bearing pads and a shaft journal; and
   a controller in signal communication with the journal bearing pad gap sensor (34) and operatively disposed to receive signals from the journal bearing pad gap sensor (34), the controller operatively configured to control the flow regulator associated with the lubricating gas inlet port operatively connected to the plurality of at least three journal bearing pads responsive to signals from the journal bearing pad gap sensor(34).
Aspect 8. The bearing assembly (10) according to any one of aspects 1 to 7 wherein the plurality of at least three thrust bearing pads and the plurality of at least three journal bearing pads each comprise through-pad lubricating gas distributors operatively connected to (i.e. in fluid communication with) the one or more lubricating gas inlet ports (to receive the lubricating gas via the one or more lubricating gas inlet ports).
Aspect 9. The bearing assembly (10) according to aspect 8 wherein the one or more lubricating gas inlet ports comprise a first lubricating gas inlet port operatively connected to the plurality of at least three thrust bearing pads and a second lubricating gas inlet port operatively connected to the plurality of at least three journal bearing pads, wherein the first lubricating gas inlet port has a first regulator associated therewith for flow and/or pressure control of lubricating gas to the plurality of at least three thrust bearing pads and the second lubricating gas inlet port has a second regulator associated therewith for flow and/or pressure control of lubricating gas to the plurality of at least three journal bearing pads, where the first regulator and the second regulator are independently adjustable.
Aspect 10. The bearing assembly according to any one of aspects 1 to 9
   wherein the bearing shell (11) comprises one or more cooling gas injection ports (32) for injecting cooling gas between two adjacent journal bearing pads (23) of the plurality of at least three journal bearing pads (23).
Aspect 11. The bearing assembly according to aspect 10 further comprising:
   a regulator associated with the one or more cooling gas injection ports (32) for injecting cooling gas between the two adjacent journal bearing pads (23) for flow and/or pressure control of cooling gas injected between the two adjacent journal bearing pads (23);
   a temperature sensor (35) operatively disposed to sense a temperature associated with one or more of the plurality of at least three journal bearing pads (23); and
   a display in signal communication with the temperature sensor (35), the display operatively disposed to receive signals from the temperature sensor (35) and
   display values representative of the temperature associated with the one or more of the plurality of at least three journal bearing pads (23) responsive to the signals from the temperature sensor (35).
Aspect 12. The bearing assembly according to aspect 10 further comprising:
   a regulator associated with the one or more cooling gas injection ports (32) for injecting cooling gas between the two adjacent journal bearing pads (23) for flow and/or pressure control of cooling gas injected between the two adjacent journal bearing pads (23);
   a temperature sensor (35) operatively disposed to sense a temperature associated with one or more of the journal bearing pads (23); and
   a controller in signal communication with the temperature sensor (35) and operatively disposed to receive signals from the temperature sensor (35), the controller operatively configured to control the regulator associated with the one or more cooling gas injection ports (32) for injecting cooling gas between the two adjacent journal bearing pads (23) responsive to the signals from the temperature sensor (35).
Aspect 13. The bearing assembly of any one of aspects 1 to 12
   wherein the bearing shell (11) comprises one or more cooling gas injection ports (19) for injecting cooling gas between two adjacent thrust bearing pads (12) of the plurality of at least three thrust bearing pads (12).
Aspect 14. The bearing assembly according to aspect 13 further comprising:
   a regulator associated with the one or more cooling gas injection ports (19) for injecting cooling gas between the two adjacent thrust bearing pads (12) for flow and/or pressure control of cooling gas injected between the two adjacent thrust bearing pads (12);
   a temperature sensor (22) operatively disposed to sense a temperature associated with one or more of the plurality of at least three thrust bearing pads (12); and
   a display in signal communication with the temperature sensor (22), the display operatively disposed to receive signals from the temperature sensor (22) and
   display values representative of the temperature associated with the one or more of the plurality of at least three thrust bearing pads (12) responsive to the signals from the temperature sensor (22).
Aspect 15. The bearing assembly according to aspect 13 further comprising:
   a regulator associated with the one or more cooling gas injection ports (19) for injecting cooling gas between the two adjacent thrust bearing pads (12) for flow and/or pressure control of cooling gas injected between the two adjacent thrust bearing pads (12);
   a temperature sensor (22) operatively disposed to sense a temperature associated with one or more of the plurality of at least three thrust bearing pads (12); and
   a controller in signal communication with the temperature sensor (22) and operatively disposed to receive signals from the temperature sensor (22), the controller operatively configured to control the regulator associated with the one or more cooling gas injection ports (19) for injecting cooling gas between the two adjacent thrust bearing pads (12) responsive to the signals from the temperature sensor (22).
Aspect 16. The bearing assembly according to aspect 10 further comprising:
   one or more cooling gas injection ports for injecting a second cooling gas between two adjacent thrust bearing pads of the plurality of at least three thrust bearing pads.
Aspect 17. The bearing assembly according to aspect 16 further comprising:
   a first regulator associated with the one or more cooling gas injection ports for injecting cooling gas between the two adjacent journal bearing pads for flow and/or pressure control of cooling gas injected between the two adjacent journal bearing pads; and
   a second regulator associated with the one or more cooling gas injection ports for injecting the second cooling gas between the two adjacent thrust bearing pads for flow and/or pressure control of cooling gas injected between the two adjacent thrust bearing pads,
   wherein the first regulator associated with the one or more cooling gas injection ports for injecting cooling gas and the second flow regulator associated with the one or more cooling gas injection ports for injecting the second cooling gas are configured to provide independent control of the flow and/or pressure of cooling gas and the second cooling gas.
Aspect 18. The bearing assembly according to any one of aspects 1 to 17 further comprising
   a compliant member disposed between the bearing shell-facing side of each of the plurality of at least three thrust bearing pads and the bearing shell.
Aspect 19. The bearing assembly according to aspect 18 wherein the compliant member is a bump foil.
Aspect 20. The bearing assembly according to any one of aspects 1 to 19 further comprising
   a compliant member disposed between the bearing shell-facing side of each of the plurality of at least three journal bearing pads and the bearing shell.
Aspect 21. The bearing assembly according to aspect 20 wherein the compliant member disposed between the bearing shell-facing side of each of the plurality of at least three journal bearing pads and the bearing shell is a bump foil.

### BRIEF DESCRIPTION OF SEVERAL VIEWS OF THE DRAWINGS

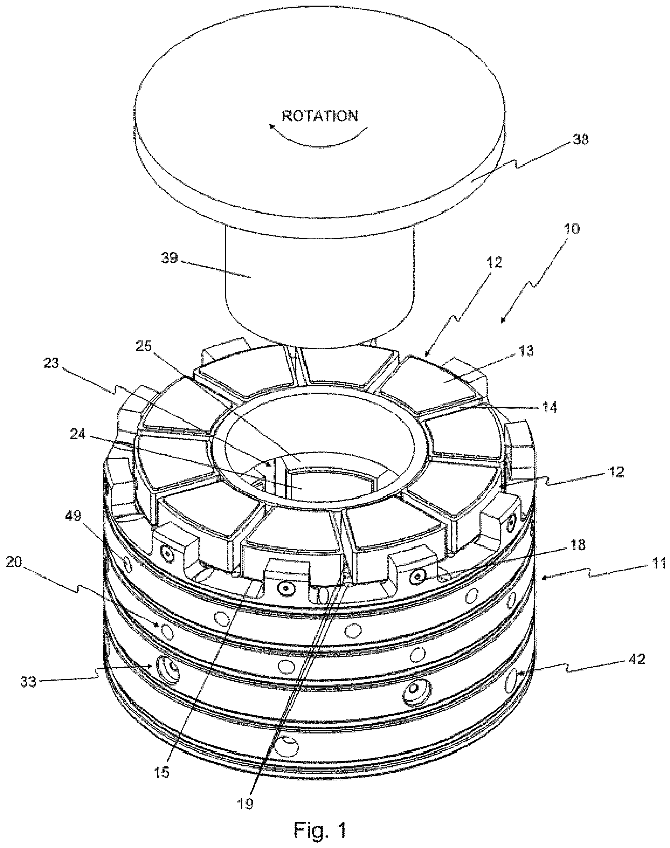

FIG. 1 shows a view of the bearing assembly and representative shaft journal and thrust runner surfaces separated from the bearing assembly.
FIG. 2 shows an isometric view of the bearing assembly.
FIG. 3 shows another isometric view of the bearing assembly.
FIG. 4 shows a front view of the thrust bearing pad-facing side of the bearing assembly.
FIG. 5 shows a side view of the bearing assembly.
FIG. 6 shows a view of the bearing assembly on the back side opposite the thrust bearing pad-facing side.
FIG. 7 shows a sectional view through section A-A of FIG. 4.

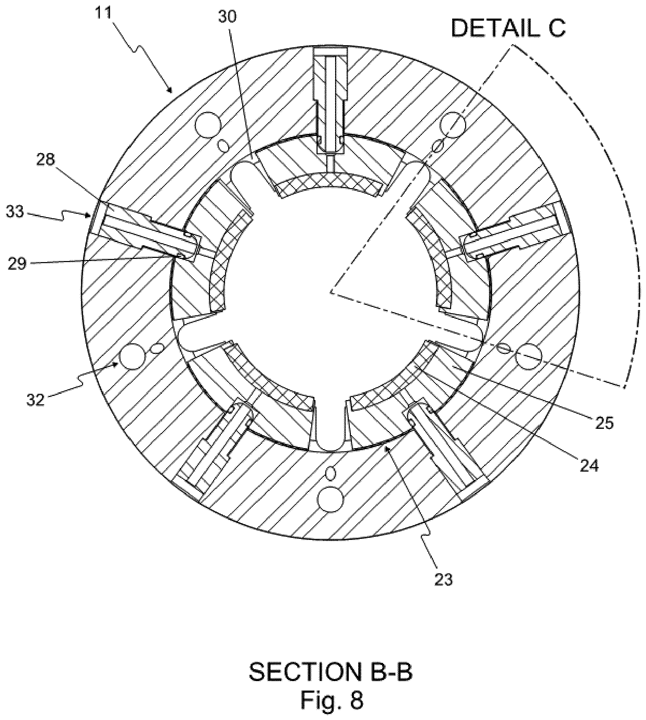

FIG. 8 shows section B-B of FIG. 5.
FIG. 9 shows detail C of FIG. 8.
FIG. 10 shows a cut-away view revealing the compliant members (bump foils) in the bearing assembly.

### DETAILED DESCRIPTION OF THE PREFERRED EMBODIMENTS

The ensuing detailed description provides preferred exemplary embodiments only, and is not intended to limit the scope, applicability, or configuration of the invention. Rather, the ensuing detailed description of the preferred exemplary embodiments will provide those skilled in the art with an enabling description for implementing the preferred exemplary embodiments of the invention, it being understood that various changes may be made in the function and arrangement of elements without departing from the scope of the invention as defined by the claims.

The articles "a" and "an" as used herein mean one or more when applied to any feature in embodiments of the present invention described in the specification and claims. The use of "a" and "an" does not limit the meaning to a single feature unless such a limit is specifically stated. The article "the" preceding singular or plural nouns or noun phrases denotes a particular specified feature or particular specified features and may have a singular or plural connotation depending upon the context in which it is used.

The adjective "any" means one, some, or all indiscriminately of whatever quantity.

The term "and/or" placed between a first entity and a second entity includes any of the meanings of (1) only the first entity, (2) only the second entity, and (3) the first entity and the second entity. The term "and/or" placed between the last two entities of a list of 3 or more entities means at least one of the entities in the list including any specific combination of entities in this list. For example, "A, B and/or C" has the same meaning as "A and/or B and/or C" and comprises the following combinations of A, B and C: (1) only A, (2) only B, (3) only C, (4) A and B and not C, (5) A and C and not B, (6) B and C and not A, and (7) A and B and C.

The phrase "at least one of" preceding a list of features or entities means one or more of the features or entities in the list of entities, but not necessarily including at least one of each and every entity specifically listed within the list of entities and not excluding any combinations of entities in the list of entities. For example, "at least one of A, B, or C" (or equivalently "at least one of A, B, and C" or equivalently "at least one of A, B, and/or C") has the same meaning as "A and/or B and/or C" and comprises the following combinations of A, B and C: (1) only A, (2) only B, (3) only C, (4) A and B and not C, (5) A and C and not B, (6) B and C and not A, and (7) A and B and C.

The term "plurality" means "two or more than two."

As used herein, "first," "second," "third," etc. are used to distinguish from among a plurality of steps and/or features, and is not indicative of the total number, or relative position in time and/or space unless expressly stated as such.

As used herein, "in fluid flow communication" or equivalently "in fluid communication" means operatively connected by one or more conduits, manifolds, valves and the like, for transfer of fluid. A conduit is any pipe, tube, passageway or the like, through which a fluid may be conveyed.

Referring now to the drawings, wherein like reference numbers refer to like elements throughout the several views, the FIGURES show several views of a bearing assembly 10 according to the preferred embodiments.

The bearing assembly 10 comprises a bearing shell 11, also called a housing. The bearing shell may comprise one or more metal structures for retaining or holding various components of the bearing assembly 10 and comprises various ports and passages for conveying various gases therein. The bearing shell may be constructed using any suitable material known in the art for the construction of the bearing shells. The bearing shell may be constructed by machining, welding, and/or by additive manufacturing. The bearing shell comprises one or more lubricating gas inlet ports 20 and 33, including thrust pad lubricating gas inlet port 20, and journal pad lubricating gas inlet port 33.

The thrust pad lubricating gas inlet port 20 and the journal pad lubricating gas inlet port 33 may each have a fitting (quick disconnect or other) which may be connected to a line (hose, tubing, pipe, etc.) which is connected to a suitable lubricating gas supply. The lubricating gas may be, for example, compressed air, compressed nitrogen, compressed helium, or other suitable gas depending on the application. The lubricating gas may be supplied at any suitable and desired temperature.

The bearing assembly 10 comprises a plurality of at least three thrust bearing pads 12. The FIGURES show ten thrust bearing pads 12. Any number of thrust bearing pads of three or greater may be used in the bearing assembly 10 as desired according to the size of the bearing assembly and according to manufacturing considerations. The thrust bearing pads are spatially located by the bearing shell 11. The plurality of at least three thrust bearing pads 12 have a shaft thrust runner-facing side and a bearing shell-facing side. The shaft thrust runner-facing side (i.e. front side) faces the shaft thrust runner 38 in operation and the bearing shell-facing side (i.e. back side) faces the bearing shell 11. The plurality of at least three thrust bearing pads 12 are housed on a shaft thrust runner-facing side of the bearing shell 11. The shaft thrust runner-facing side of the bearing shell 11 is the side facing the shaft thrust runner 38 in operation, although the thrust bearing pads 12 are disposed between the shaft thrust runner-facing side of the bearing shell 11 and the shaft thrust runner 38.

The bearing assembly 10 comprises a plurality of at least three journal bearing pads 23 housed within the bearing shell 11. The FIGURES show five journal bearing pads 23 housed within the bearing shell 11. Any number of journal bearing pads of three or greater may be used in the bearing assembly 10 as desired according to the size of the bearing assembly and according to manufacturing considerations. The journal bearing pads are spatially located by the bearing shell 11. The plurality of at least three journal bearing pads 23 have a shaft journal-facing side and a bearing shell-facing side. The shaft journal-facing side faces the shaft journal 39 in operation and the bearing shell-facing side faces the bearing shell 11. The plurality of at least three journal bearing pads 23 are housed on a shaft journal-facing side of the bearing shell 11. The shaft journal-facing side of the bearing shell 11 is the side facing the shaft journal 39 in operation, although the journal bearing pads 23 are disposed between the shaft journal-facing side of the bearing shell 11 and the shaft journal 39.

Each thrust bearing pad 12 of the plurality of at least three thrust bearing pads 12 may comprise through-pad lubricating gas distributors 13 disposed on the shaft thrust runner-facing side of each respective thrust bearing pad. The through-pad lubricating gas distributors 13 are operatively connected to (i.e. in fluid communication with) at least one of the one or more lubricating gas inlet ports 20 to receive a lubricating gas via the one or more lubricating gas inlet ports 20. Through-pad lubricating gas distributors (13) comprise at least one of (i) a porous layer having connected-through porosity, (ii) a dense layer having a plurality of at least six orifices defined therethrough, or (iii) a porous layer having connected-through porosity having a plurality of at least six orifices defined therethrough. The porous layer or dense layer may have a thickness ranging from 2 mm to 25 mm. The term "through-pad" means that lubricating gas passes through the pad, i.e. through the porous layer or through the dense layer via the at least six orifices.

The through-pad lubricating gas distributors 13 of each of the plurality of at least three thrust bearing pads 12 are operatively disposed to deliver/distribute lubricating gas between each respective thrust bearing pad 12 and the shaft thrust runner 38 when in operation.

The term "connected-through porosity" means that the porous layer has a matrix of pores throughout its three-dimensional structure which is capable of transferring lubricating gas from one side of the porous layer to the opposite side of the porous layer.

The porous layer may be provided as a carbon or graphite material, sintered metal, or porous polymers. The porous layer may be fabricated using any known method for making a porous layer (e.g. pressing, sintering, chemical dissolving, additive manufacturing, laser drilling, etc.) Fabrication techniques for making porous layers are well-known and commercial manufacturers exist for making porous materials. The porous layer may have any suitable porosity, for example, ranging from about 8% porosity to 60% porosity by volume.

The term "dense" means having no connected-through porosity. While the dense layer is dense, meaning that the layer does not possess a network of pores, the dense layer may have minor fissures or holes in addition to the plurality of at least six orifices.

Each thrust bearing pad 12 of the plurality of at least three thrust bearing pads 12 may comprise a respective thrust pad backing plate 14. The through-pad lubricating gas distributors 13 may be mechanically fixed to a respective thrust pad backing plate 14 by screws, rivets, epoxy, or other known fastening means. Alternatively, the thrust bearing pads 12 and the thrust pad backing plate 14 could be additively manufactured.

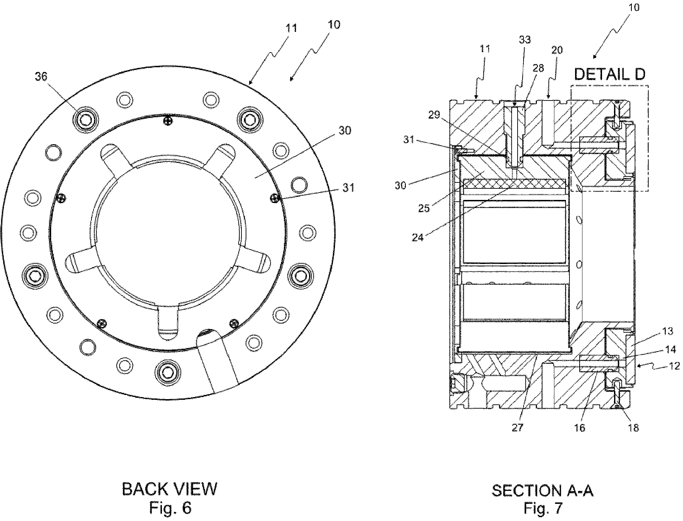

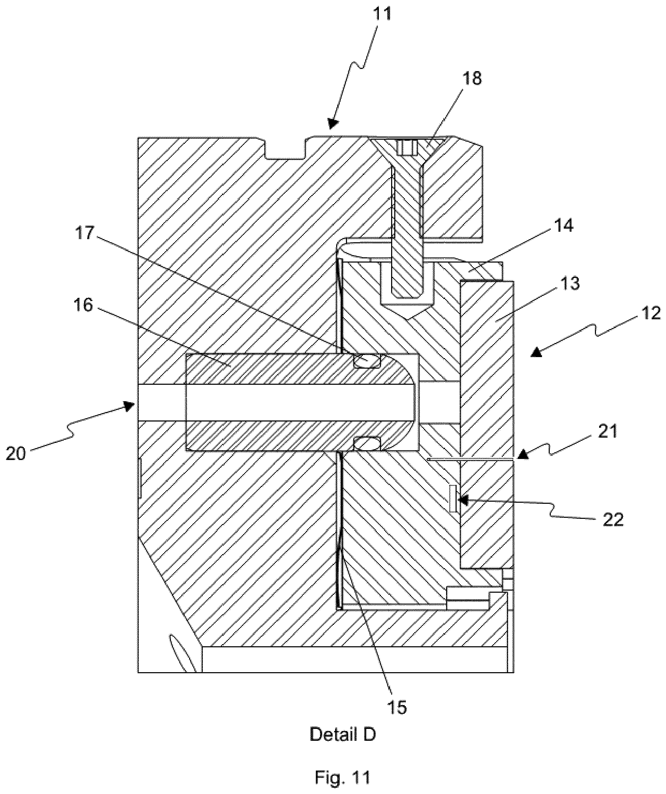

As shown in FIG. 7 and FIG. 11, the bearing assembly 10 may comprise thrust pad pivot pins 16 for each respective thrust bearing pad 12. The thrust pad pivot pins 16 may be rigidly mounted in the bearing shell 11 and are used as the pivot point for the pad tilting capability. Alternatively, the thrust pad pivot pins 16 may be integrally machined or fabricated as part of the bearing shell 11.

The thrust pad pivot pins 16 may be configured with a channel to transfer lubricating gas to the through-pad lubricating gas distributors 13 of the thrust bearing pads 12. The thrust pad pivot pins 16 may be fitted with seals 17 (i.e. O-rings) to prevent leakage of the lubricating gas at the interface between the pivot pin 16 and the backing plate 14. Other designs for transferring lubricating gas to the through-pad lubricating gas distributors 13, for example, using flexible tubing may also be used, however, a channel in the thrust pad pivot pin 16 appears most convenient.

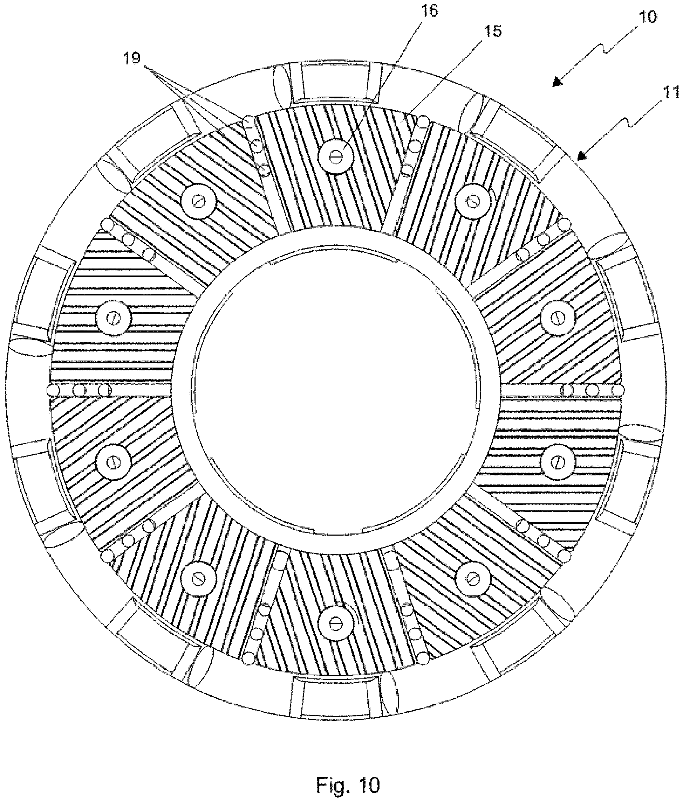

The bearing assembly 10 may comprise a compliant member 15 disposed between the bearing shell-facing side of each of the plurality of at least three thrust bearing pads 12 and the bearing shell 11 as shown in FIG. 10. The compliant member 15 may be a spring, a bump foil, or the like. The compliant members 15 may have a central hole to permit passage of respective thrust pad pivot pins 16 and acts to permit self-alignment of respective thrust bearing pads 12 and provide damping by sliding against the contact surfaces during motion of the shaft thrust runner 38. The friction between the surfaces provides coulomb damping by dissipating energy and thus reduces the amplitude of subsequent motion.

A bump foil is a thin sheet of metal that is formed into corrugated shapes and may be constructed from a material than can be processed to form a stiff spring, such as Inconel X750. Other high-alloy steel materials can also be processed to perform as springs. The corrugations formed into bump foils may alternate between semi-circular form and flat form. Other forms and patterns of bumps exist, such as sinusoidal, alternating high and low sinusoidal, or semicircular and flat, or other patterns. The general shape of the corrugations in the bump foils can be determined based on the load to be carried by the bearing and the stiffness required to operate the equipment in a rotor dynamically safe region and as such, the geometry can be configured to suit the application. Performance testing of the bearing assembly can be done to confirm the performance within acceptable parameters with regard to shaft vibration.

The material used to manufacture bump foils may generally range in thickness from 0.051 mm (0.002 in.) to 0.254 mm (0.010 in.). However, in general, heavier shafts require larger bump foil thicknesses to provide more force and larger stiffness due to the larger forces generated in the shaft.

The compliant member 15 may be a bump foil. The corrugations of the bump foil may be oriented to be parallel with the leading edge of the thrust bearing pad 12 as shown in FIG. 10. It is believed that this arrangement will establish a proper tilt of the thrust bearing pad 12 to achieve a desired gas film pressure profile over the surface of the thrust bearing pad 12.

Each thrust bearing pad 12 may be installed on its respective thrust pad pivot pin 16 and retained from falling out of the bearing assembly 10 by respective thrust pad retention screws 18. The thrust pad retention screws 18 have sufficient clearance between the screw and the hole in the thrust bearing pads 12 to permit pivoting motion of the thrust bearing pads without binding. Other methods of retention of the thrust bearing pads 12 may be employed provided that the retention method does not inhibit needed motion of the thrust bearing pad.

Each **journal bearing pad 23** of the plurality of at least three journal bearing pads may comprise through-pad lubricating gas distributors 24 disposed on the shaft journal-facing side of each respective journal bearing pad. The through-pad lubricating gas distributors 24 are operatively connected to (i.e. in fluid communication with) at least one of the one or more lubricating gas inlet ports 33 to receive a lubricating gas via the one or more lubricating gas inlet ports 33. Through-pad lubricating gas distributors (24) comprise (i) a porous layer having connected-through porosity, (ii) a dense layer having a plurality of at least six orifices defined therethrough, or (iii) a porous layer having connected-through porosity having a plurality of at least six orifices defined therethrough. The porous layer or dense layer may have a thickness ranging from 2 mm to 25 mm.

The through-pad lubricating gas distributors 24 of each of the plurality of at least three journal bearing pads 23 are operatively disposed to deliver/distribute lubricating gas between each respective journal bearing pad 23 and a shaft journal 39 when in operation.

The layer forming the through-pad lubricating gas distributors 24 of the journal bearing pads 23 may have a geometry so as to form a converging wedge between the journal bearing pad surface and the shaft journal 39. As the shaft rotates, the converging geometry acts to help build a pressure profile on the surface of the through-pad lubricating gas distributor 24 by converging the lubricating gas as well as some additional flow from cooling gas into a converging wedge by hydrodynamic action. The hydrodynamic action is created when the lubricating gas sticks to the surface of the shaft journal 39 and is pulled into the gap between the through-pad lubricating gas distributors 24 and the shaft journal 39. The converging taper in the layer forming the through-pad lubricating gas distributors 24 may range from 0.00254 mm (0.0001 in.) to 0.127 mm (0.0050 in.) depending on the bearing diameter and design operation speeds.

Alternatively, a converging wedge may be formed by a radius of curvature of the layer forming the through-pad lubricating gas distributors 24 having a different center than the radius of curvature of the shaft journal 39. This is typically referred to as bearing preload.

Each journal bearing pad 23 of the plurality of at least three journal bearing pads 23 may comprise a respective journal pad backing plate 25. The through-pad lubricating gas distributors 24 may be mechanically fixed to a respective thrust pad backing plate 25 by screws, rivets, epoxy, or other known fastening means. Alternatively, the thrust journal bearing pads 23 and the journal pad backing plates 25 could be additively manufactured.

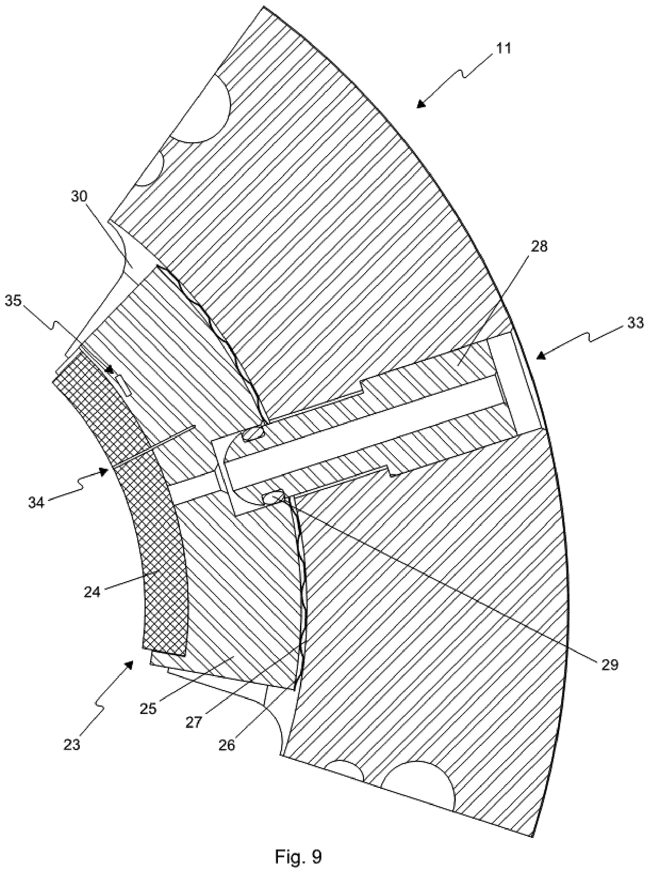

As shown in FIG. 7 and FIG. 9, the bearing assembly 10 may comprise journal pad pivot pins 28 for each respective journal bearing pad 23. The journal pad pivot pins 28 may be rigidly mounted in the bearing shell 11 and are used as the pivot point for the journal pad tilting capability. Alternatively, the journal pad pivot pins 28 may be integrally machined or fabricated as part of the bearing shell 11.

The journal pad pivot pins 28 may be configured with a channel to transfer lubricating gas to the through-pad lubricating gas distributors 24 of the journal bearing pads 23. The journal pad pivot pins 28 may be fitted with seals 29 (i.e. O-rings) to prevent leakage of the lubricating gas at the interface between the pivot pin 28 and the backing plate 25. Other designs for transferring lubricating gas to the through-pad lubricating gas distributors 24, for example, using flexible tubing may also be used, however, a channel in the thrust pad pivot pin 28 appears most convenient.

The bearing assembly 10 may comprise a compliant member 26 disposed between the bearing shell-facing side of each of the plurality of at least three journal bearing pads and the bearing shell 11 as shown in FIG. 9. The compliant member 26 may be a spring, a bump foil, or the like.

The compliant member 26 may be a bump foil. The bump foil for the journal bearing pad may have corrugations that are oriented with the axis of the corrugation parallel to the centerline axis of the shaft. This arrangement is believed to achieve a desired gas film pressure profile over the surface of the journal bearing pad.

The bearing assembly 10 may comprise a journal pad shim 27 between the compliant member 26 and the bearing shell 11. Both the compliant member 26 and the journal pad shim 27 may have a central hole to permit passage of the journal pad pivot pin 28 through each of the compliant member 26 and the journal pad ship 27.

The journal pad shim 27 is used to adjust the clearance between the journal bearing pad 23 and the shaft journal 39.

The compliant member 26 acts to permit self-alignment of the journal bearing pad 23 and provide damping by sliding against the contact surface during shaft motion. The friction between the surfaces provide coulomb damping by dissipating energy and thus reducing the amplitude of subsequent motion.

The journal bearing pad 23 is installed on the journal pad pivot pin 28. Once all of the journal bearing pads 23 are installed, the retaining plate 30 and retaining plate screws 31 are installed to retain the journal bearing pads 23 and prevent them from falling out of the bearing shell 11. Each retaining plate 30 has adequate clearance to its respective journal bearing pads 23 to prevent binding during motion of the journal bearing pads 23. Other retaining designs may be employed provided the retaining design does not inhibit needed motion of the journal bearing pad 23.

The bearing assembly is characterized by at least one of the thrust bearing pads and the journal bearing pads comprising through-pad lubricating gas distributors. That is, (i) the thrust bearing pads comprise through-pad lubricating gas distributors, or (ii) the journal bearing pads comprise through-pad lubricating gas distributors, or (iii) both the thrust bearing pads and the journal bearing pads comprise through-pad lubricating gas distributors.

Through-pad lubricating gas distributors in the thrust bearing pads permit lubricating gas to flow through the thrust bearing pad to the interface between the thrust bearing pad and the shaft thrust runner 38. Through-pad lubricating gas distributors in the journal bearing pads permit lubricating gas to flow through the journal bearing pad to the interface between the journal bearing pad and the shaft journal 39. The flow of pressurized lubricating gas to the thrust and journal bearing pad surfaces generate a hydrostatic lift force that will levitate the shaft on a thin gas film. Since hydrostatic gas bearings often have limitations that prevent attaining high speed due to insufficient flow, the through-pad lubricating gas distributors may comprise a porous layer having connected-through porosity having a plurality of at least six orifices defined therethrough to provide additional flow to the gas film.

The thrust bearing pads and the journal bearing pads may be provided as an integrated, single cartridge assembly or segregated as individual cartridges for the thrust bearing pads and the journal bearing pads depending on the machine configuration. A machine typically comprises a bearing assembly on each end of a rotating shaft.

The bearing assembly 10 may comprise a regulator (not shown) associated with the at least one of the one or more lubricating gas inlet port 20 that is operatively connected to the plurality of at least three thrust bearing pads for flow and/or pressure (i.e. (i) flow, or (ii) pressure, or (iii) flow and pressure) control of lubricating gas to the plurality of at least three thrust bearing pads 12. The regulator may be a flow control valve, a pressure control valve, or the like.

The bearing assembly 10 may comprise a thrust bearing pad gap sensor 21 operatively disposed to sense a measure of a gap between a first thrust bearing pad 12 of the plurality of at least three thrust bearing pads 12 and a shaft thrust runner 38. The thrust bearing pad gap sensor 21 may transmit signals. In FIG. 11, the thrust bearing pad gap sensor 21 is represented by the passage in the thrust bearing pad 12 that permits a measurement of the pressure between the thrust bearing pad 12 and the shaft thrust runner 38 by a pressure sensor (not shown) so that the gap (or equivalently the gas film thickness) can be determined.

The thrust bearing pad gap sensor 21 design may be, for example, as described in U.S. Pat. No. 9506498, and available commercially from Specialty Components, Inc.

More than one, and even all of the at least three thrust bearing pads 12 may have a thrust bearing pad gap sensor 21 associated therewith to sense a measure of a respective gap between each respective thrust bearing pad 12 of the plurality of at least three thrust bearing pads 12 and the shaft thrust runner 38 where each thrust bearing pad gap sensor 21 transmits signals responsive to sensing the measure of its respective gap.

The bearing assembly 10 may comprise a display (not shown) in signal communication with one or more thrust bearing pad gap sensors 21. The display may be operatively disposed to receive signals from one or more of the thrust bearing pad gap sensors 21 and display values representative of the measure of the gap responsive to the signals from the respective thrust bearing pad gap sensor 21. The signal communication may be hard-wired or wireless.

The display may be a digital readout, smart phone, computer display screen, or other suitable device for displaying values representing the measure of the gap between one or more thrust bearing pads and the shaft thrust runner 38.

The regulator associated with the lubricating gas inlet port 20 for flow and/or pressure control of lubricating gas to the plurality of at least three thrust bearing pads 12 may be manually adjusted by an operator responsive to reading a displayed value on the display.

The bearing assembly 10 may comprise a controller (not shown) in signal communication with one or more thrust bearing pad gap sensors 21 and operatively disposed to receive signals from one or more thrust bearing pad gap sensors 21. The signal communication between the controller and the sensor may be hard-wired or wireless. The controller may be operatively configured to control the regulator (not shown) associated with the lubricating gas inlet port operatively connected to the plurality of at least three thrust bearing pads 12 for flow and/or pressure control of lubricating gas to the plurality of at least three thrust bearing pads 12 responsive to signals from one or more thrust bearing pad gap sensors 21.

More than one, and even all of the at least three thrust bearing pads 12 may have a thrust bearing pad gap sensor 21 associated therewith to sense a measure of a respective gap between each respective thrust bearing pad 12 of the plurality of at least three thrust bearing pads 12 and the shaft thrust runner 38 where each thrust bearing pad gap sensor 21 transmits signals to the controller (not shown).

The bearing assembly 10 may comprise a regulator (not shown) associated with the lubricating gas inlet port 33 operatively connected to the plurality of at least three journal bearing pads 23 for flow and/or pressure (i.e. (i) flow, (ii) pressure, or (iii) flow and pressure) control of lubricating gas to the plurality of at least three journal bearing pads 23. The regulator may be a flow control valve, a pressure control valve, or the like.

The bearing assembly 10 may comprise a journal bearing pad gap sensor 34 operatively disposed to sense a measure of a gap between a first journal bearing pad 23 of the plurality of at least three journal bearing pads 23 and a shaft journal 39. The journal bearing pad gap sensor 34 may transmit signals. In FIG. 9, the journal bearing pad gap sensor 34 is represented by the passage in the journal bearing pad that permits a measurement of the pressure between the journal bearing pad 23 and the shaft journal 39 by a pressure sensor (not shown) so that the gap (or equivalently the gas film thickness) can be determined.

The journal bearing pad gap sensor 34 may be, for example, as described in U.S. Pat. No. 9506498, and available commercially from Specialty Components, Inc.

More than one, and even all of the at least three journal bearing pads 23 may have a journal bearing pad gap sensor 34 associated therewith to sense a measure of a respective gap between each respective journal bearing pad 23 of the plurality of at least three journal bearing pads 23 and the shaft journal 39 where each journal bearing pad gap sensor 34 transmits signals responsive to sensing the measure of its respective gap.

The bearing assembly 10 may comprise a display (not shown) in signal communication with one or more journal bearing pad gap sensors 34. The display may be operatively disposed to receive signals from one or more of the journal bearing pad gap sensors 34 and display values representative of the measure of the gap responsive to the signals from the respective journal bearing pad gap sensor 34. The signal communication may be hard-wired or wireless. The display for displaying the values from the journal bearing pad gap sensor 34 may be the same display as for displaying the values from the thrust bearing pad gap sensor 21 or a different display.

The display may be a digital readout, smart phone, computer display screen, or other suitable device for displaying values representing the measure of the gap between one or more journal bearing pads of the plurality of at least three journal bearing pads 23 and a shaft journal 39.

The regulator associated with the lubricating gas inlet port 33 for flow and/or pressure control of lubricating gas to the plurality of at least three journal bearing pads 23 may be manually adjusted by an operator responsive to reading a displayed value on the display.

The bearing assembly 10 may comprise a controller (not shown) in signal communication with the journal bearing pad gap sensor 34 and operatively disposed to receive signals from the journal bearing pad gap sensor 34. The signal communication between the controller and the sensor may be hard-wired or wireless. The controller may be operatively configured to control the regulator (not shown) associated with the lubricating gas inlet port 33 operatively connected to the plurality of at least three journal bearing pads 23 for flow and/or pressure control of lubricating gas to the plurality of at least three journal bearing pads 23 responsive to signals from the journal bearing pad gap sensor 34.

More than one, and even all of the at least three journal bearing pads 23 may have a journal bearing pad gap sensor 34 associated therewith to sense a measure of a respective gap between each respective journal bearing pad 23 of the plurality of at least three journal bearing pads 23 and the shaft journal 39 where each journal bearing pad gap sensor 34 transmits signals to the controller (not shown).

The regulator associated with the lubricating gas inlet port 20 operatively connected to the plurality of at least three thrust bearing pads 12 and the regulator associated with the lubricating gas inlet port 33 operatively connected to the plurality of at least three journal bearing pads 23 may be independently adjustable. This independent adjustment of the lubricating gas to the thrust bearing pads and the journal bearing pads provides the benefit of independent adjustment and tuning of the system to achieve the desired bearing performance.

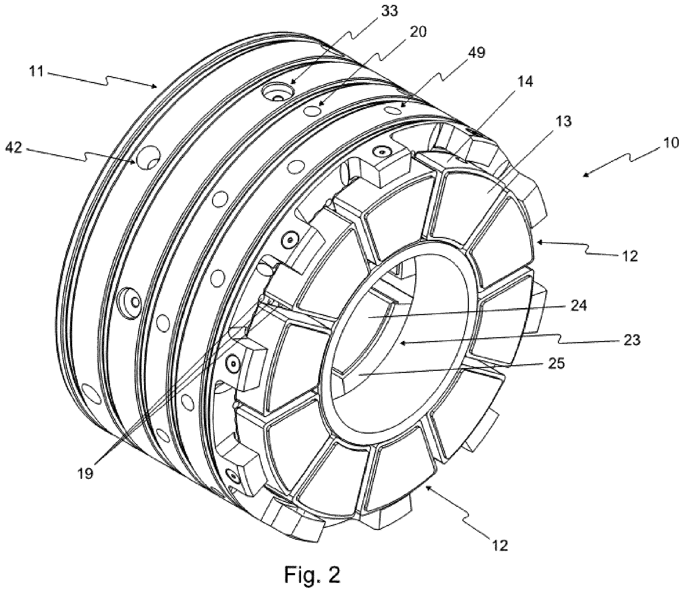

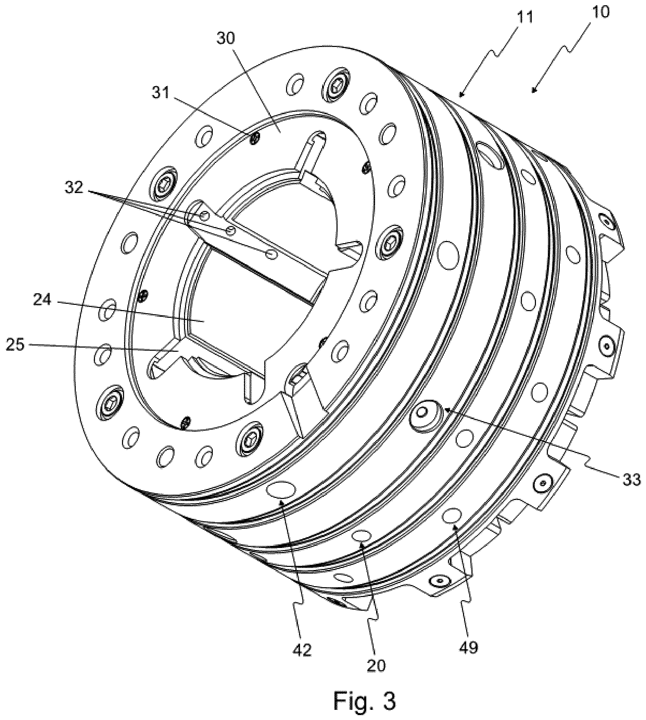

The bearing shell 11 may comprise one or more cooling gas injection ports 32 for injecting cooling gas between two adjacent journal bearing pads 23 of the plurality of at least three journal bearing pads 23 as shown in FIGS. 2 and 3. The one or more cooling gas injection ports 32 may be supplied with cooling gas via respective cooling gas inlet ports 42. Each cooling gas inlet port 42 may have a fitting (quick disconnect or other) which may be connected to a line (hose, tube, pipe, etc.) which is connected to a suitable cooling gas supply. The cooling gas may be, for example, compressed air, compressed nitrogen, compressed helium, or other gas. The cooling gas may be supplied at any suitable and desired temperature. The cooling gas may be the same composition as any of the lubricating gases or a different composition than any of the lubricating gases. The cooling gas may come from the same source as any of the lubricating gases or a different source.

The bearing assembly 10 may comprise a regulator (not shown) associated with the one or more cooling gas injection ports 32 for injecting cooling gas between the two adjacent journal bearing pads 23 for flow and/or pressure (i.e. (i) flow, or (ii) pressure, or (iii) flow and pressure) control of cooling gas injected between the two adjacent journal bearing pads 23.

The bearing assembly 10 may comprise a temperature sensor 35 operatively disposed to sense a temperature associated with one or more of the plurality of at least three journal bearing pads 23. The temperature sensor 35 may be, for example, a resistance temperature detector (RTD), a thermocouple, or other known temperature sensor. Multiple temperature sensors may be used to sense temperatures associated with the plurality of at least three journal bearing pads.

The bearing assembly 10 may comprise a display (not shown) in signal communication with the temperature sensor 35. The display may be operatively disposed to receive signals from the temperature sensor 35 and display values representative of the temperature associated with the one or more of the plurality of at least three journal bearing pads 23 responsive to the signals from the temperature sensor 35. The signal communication may be hard-wired or wireless. The display may be a digital readout, smart phone, computer display screen, or other suitable device for displaying values measured by the temperature sensor 35. The display for displaying the values from the temperature sensor 35 may be the same display as for displaying the values from the thrust bearing pad gap sensor 21 and/or the journal bearing pad gap sensor 34, or a different display.

The regulator associated with the one or more cooling gas injection ports 32 may be manually adjusted by an operator in response to the displayed temperature values.

Alternatively, or in addition to the display, the bearing assembly 10 may comprise a controller (not shown) in signal communication with the temperature sensor 35 and operatively disposed to receive signals from the temperature sensor 35. The controller may be operatively configured to control the regulator associated with the one or more cooling gas injection ports 32 for injecting cooling gas between the two adjacent journal bearing pads 23 responsive to the signals from the temperature sensor 35.

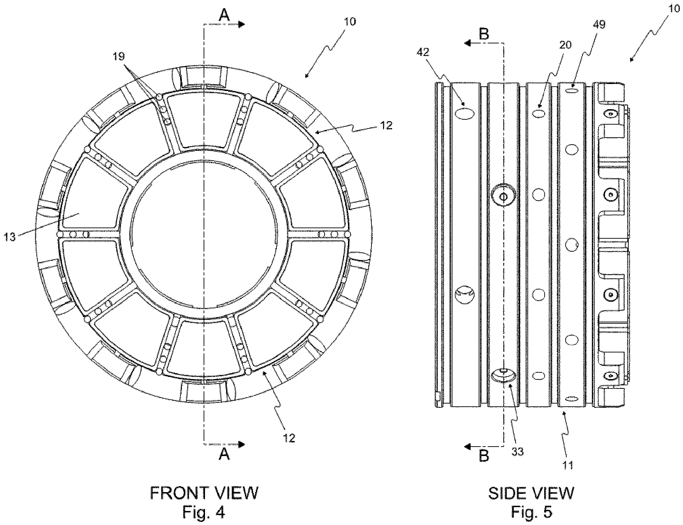

The bearing shell 11 may comprise one or more cooling gas injection ports 19 for injecting cooling gas between two adjacent thrust bearing pads 12 of the plurality of at least three thrust bearing pads 12 as shown in FIG. 4. The one or more cooling gas injection port 19 may be supplied with cooling gas via respective cooling gas inlet ports 49. Each cooling gas inlet port 49 may have a fitting (quick disconnect or other) which may be connected to a line (hose, tube, pipe, etc.) which is connected to a suitable cooling gas supply. The cooling gas injected between thrust bearing pads 12 may be, for example, compressed air, compressed nitrogen, compressed helium, or other gas. The cooling gas may be supplied at any suitable and desired temperature. The cooling gas injected between thrust bearing pads 12 may be the same composition as any of the lubricating gases, the cooling gas injected between the journal bearing pads, or a different composition. The cooling gas may come from the same source as any of the lubricating gases, the cooling gas injected between the journal bearing pads, or a different source.

The bearing assembly 10 may comprise a regulator (not shown) associated with the one or more cooling gas injection ports 19 for injecting cooling gas between the two adjacent thrust bearing pads 12 for flow and/or pressure (i.e. (i) flow, or (ii) pressure, or (iii) flow and pressure) control of cooling gas injected between the two adjacent thrust bearing pads 12.

The bearing assembly 10 may comprise a temperature sensor 22 operatively disposed to sense a temperature associated with one or more of the plurality of at least three thrust bearing pads 12. The temperature sensor 22 may be, for example, a resistance temperature detector (RTD), a thermocouple, or other known temperature sensor. Multiple temperature sensors may be used to sense temperatures associated with the plurality of at least three thrust bearing pads 12.

The bearing assembly 10 may comprise a display (not shown) in signal communication with the temperature sensor 22. The display may be operatively disposed to receive signals from the temperature sensor 22 and display values representative of the temperature associated with the one or more of the plurality of at least three thrust bearing pads 12 responsive to the signals from the temperature sensor 22. The signal communication may be hard-wired or wireless. The display may be a digital readout, smart phone, computer display screen, or other suitable device for displaying values measured by the temperature sensor 22. The display for displaying the values from the temperature sensor 22 may be the same display as for displaying the values from the thrust bearing pad gap sensor 21 and/or the journal bearing pad gap sensor 34, or the temperature sensor 35, or a different display.

The regulator associated with the one or more cooling gas injection ports 19 may be manually adjusted by an operator in response to the displayed temperature values.

Alternatively, or in addition to the display, the bearing assembly 10 may comprise a controller (not shown) in signal communication with the temperature sensor 22 and operatively disposed to receive signals from the temperature sensor 22. The controller may be operatively configured to control the regulator associated with the one or more cooling gas injection ports 19 for injecting cooling gas between the two adjacent thrust bearing pads 12 responsive to the signals from the temperature sensor 22.

The regulator associated with the one or more cooling injection ports 32 for injecting cooling gas between two adjacent journal bearing pads 23 and the regulator associated with the one or more cooling injection ports 19 for injecting cooling gas between two adjacent thrust bearing pads 12 may be configured to provide independent control of the flow and/or pressure of cooling gas to each of the respective cooling injection ports 32 and 19.

Each of (i) the regulator associated with the lubricating gas inlet port 20 operatively connected to the plurality of at least three thrust bearing pads 12, (ii) the regulator associated with the lubricating gas inlet port 33 operatively connected to the plurality of at least three journal bearing pads 23, (iii) the regulator associated with the one or more cooling injection ports 32 for injecting cooling gas between two adjacent journal bearing pads 23, and (iv) the regulator associated with the one or more cooling injection ports 19 for injecting cooling gas between two adjacent thrust bearing pads 12 may be independently adjustable and configured to provide independent control of the flow and/or pressure of respective lubricating gas or cooling gas. This permits independent control of gases for lubrication and thermal management of the bearing assembly. This independent control has the benefit of improving the performance of the bearing assembly with regard to capacity and damping, while reducing the consumption of lubricating gas and cooling gas.

To use the bearing assembly, lubricating gas is introduced to the one or more lubricating gas inlet ports and to the through-pad lubricating gas distributors of the journal bearing pads 23 and the thrust bearing pads 12. Lubricating gas flow rates are adjusted until "lift off" of the shaft is observed. "Lift off" is when the shaft floats on a film of lubricating gas between the journal bearing pads 23 and the shaft journal 39, and between the thrust bearing pads 12 and the shaft thrust runner 38. When the shaft achieves proper lift off, manual rotation of the shaft will be possible with almost no effort.

The initial deflection of the bump foils is increased by the supply of lubricating gas, which effectively increase the bearing load capacity and stiffness. The stiffness of the gas film between the bearing pads 23 and 12 and the shaft journal 39 and shaft thrust runner 38 is a function of the gas film thickness. The bump foil stiffness is a function of the deflection of the bump foil under a load. Since the gas film stiffness increases dramatically as the gas film thickness decreases, and the bump foil stiffness is fairly linear as load and deflection is increase, it should be appreciated that the bump foils will experience the larger of the deflections due to movement of the shaft from its neutral operating position and the gas film thickness will remain relatively constant.

As the load on the bump foils increases, the load acts to flatten the corrugations, which causes friction between the bump foils and the bearing pads and the bearing shell 11 in the case of the thrust bearing pads 12 and the journal pad shim 27 in the case of the journal bearing pads 23. The friction causes heat and dissipation of energy which effectively dampens the oscillating behavior of the shaft. The tilting function of the bearing pads on the bump foils allows the pads to self-adjust and align to the shaft which enhances the stability of the system. Through this design, the bearing assembly enables operation of externally pressurized gas bearings at high speeds and higher loading capacity.

## Claims

1. A bearing assembly (10) comprising:
a bearing shell (11);
a plurality of at least three thrust bearing pads (12), the plurality of at least three thrust bearing pads (12) housed on a shaft thrust runner-facing side of the bearing shell (11), wherein each of the plurality of at least three thrust bearing pads (12) has a shaft thrust runner-facing side and a bearing shell-facing side;
a plurality of at least three journal bearing pads (23) housed within the bearing shell (11), wherein each of the plurality of at least three journal bearing pads (23) has a shaft journal-facing side and a bearing shell-facing side;
wherein the bearing shell (11) comprises one or more lubricating gas inlet ports (20, 33); and
wherein (i) each thrust bearing pad (12) of the plurality of at least three thrust bearing pads (12) comprises through-pad lubricating gas distributors (13) disposed on the shaft thrust runner-facing side of each respective thrust bearing pad, the through-pad lubricating gas distributors operatively connected to at least one of the one or more lubricating gas inlet ports (20) and/or (ii) each journal bearing pad (23) of the plurality of at least three journal bearing pads (23) comprises through-pad lubricating gas distributors (24) disposed on the shaft journal-facing side of each respective journal bearing pad, the through-pad lubricating gas distributors operatively connected to at least one of the one or more lubricating gas inlet ports (33),
wherein the through-pad lubricating gas distributors (13, 24) comprise at least one of (i) a porous layer having connected-through porosity, (ii) a dense layer having a plurality of at least six orifices defined therethrough, or (iii) a porous layer having connected-through porosity and having a plurality of at least six orifices defined therethrough.

2. The bearing assembly (10) according to claim 1 wherein the plurality of at least three thrust bearing pads (12) each comprise through-pad lubricating gas distributors (13), wherein the one or more lubricating gas inlet ports comprise a lubricating gas inlet port operatively connected to the plurality of at least three thrust bearing pads, the bearing assembly further comprising:
a regulator associated with the at least one of the one or more lubricating gas inlet ports operatively connected to the plurality of at least three thrust bearing pads for flow and/or pressure control of lubricating gas to the plurality of at least three thrust bearing pads.

3. The bearing assembly (10) according to claim 2 further comprising
a thrust bearing pad gap sensor (21) operatively disposed to sense a measure of a gap between a first thrust bearing pad of the plurality of at least three thrust bearing pads and a shaft thrust runner (38); and at least one of:
(i) a display in signal communication with the thrust bearing pad gap sensor (21), the display operatively disposed to receive signals from the thrust bearing pad gap sensor (21) and display values representative of the measure of the gap responsive to the signals from the thrust bearing pad gap sensor (21); or
(ii) a controller in signal communication with the thrust bearing pad gap sensor (21) and operatively disposed to receive signals from the thrust bearing pad gap sensor (21), the controller operatively configured to control the regulator associated with the lubricating gas inlet port operatively connected to the plurality of at least three thrust bearing pads for flow and/or pressure control of lubricating gas to the plurality of at least three thrust bearing pads responsive to signals from the thrust bearing pad gap sensor (21).

4. The bearing assembly (10) according to any one of claims 1 to 3 wherein the plurality of at least three journal bearing pads each comprise through-pad lubricating gas distributors, wherein the one or more lubricating gas inlet ports comprise a lubricating gas inlet port operatively connected to the plurality of at least three journal bearing pads, the bearing assembly further comprising:
a regulator associated with the lubricating gas inlet port operatively connected to the plurality of at least three journal bearing pads for flow and/or pressure control of lubricating gas to the plurality of at least three journal bearing pads.

5. The bearing assembly (10) according to claim 4 further comprising
a journal bearing pad gap sensor (34) operatively disposed to sense a measure of a gap between a first journal bearing pad of the plurality of at least three journal bearing pads and a shaft journal; and at least one of:
(i) a display in signal communication with the journal bearing pad gap sensor (34), the display operatively disposed to receive signals from the journal bearing pad gap sensor (34) and display values representative of the measure of the gap responsive to the signals from the journal bearing pad gap sensor (34); or
(ii) a controller in signal communication with the journal bearing pad gap sensor (34) and operatively disposed to receive signals from the journal bearing pad gap sensor (34), the controller operatively configured to control the flow regulator associated with the lubricating gas inlet port operatively connected to the plurality of at least three journal bearing pads responsive to signals from the journal bearing pad gap sensor (34).

6. The bearing assembly (10) according to any one of claims 1 to 5 wherein the plurality of at least three thrust bearing pads and the plurality of at least three journal bearing pads each comprise through-pad lubricating gas distributors operatively connected to the one or more lubricating gas inlet ports.

7. The bearing assembly (10) according to claim 6 wherein the one or more lubricating gas inlet ports comprise a first lubricating gas inlet port operatively connected to the plurality of at least three thrust bearing pads and a second lubricating gas inlet port operatively connected to the plurality of at least three journal bearing pads, wherein the first lubricating gas inlet port has a first regulator associated therewith for flow and/or pressure control of lubricating gas to the plurality of at least three thrust bearing pads and the second lubricating gas inlet port has a second regulator associated therewith for flow and/or pressure control of lubricating gas to the plurality of at least three journal bearing pads, where the first regulator and the second regulator are independently adjustable.

8. The bearing assembly according to any one of claims 1 to 7
wherein the bearing shell (11) comprises one or more cooling gas injection ports (32) for injecting cooling gas between two adjacent journal bearing pads (23) of the plurality of at least three journal bearing pads (23).

9. The bearing assembly according to claim 8 further comprising:
a regulator associated with the one or more cooling gas injection ports (32) for injecting cooling gas between the two adjacent journal bearing pads (23) for flow and/or pressure control of cooling gas injected between the two adjacent journal bearing pads (23);
a temperature sensor (35) operatively disposed to sense a temperature associated with one or more of the plurality of at least three journal bearing pads (23); and
at least one of:
(i) a display in signal communication with the temperature sensor (35), the display operatively disposed to receive signals from the temperature sensor (35) and display values representative of the temperature associated with the one or more of the plurality of at least three journal bearing pads (23) responsive to the signals from the temperature sensor (35); or
(ii) a controller in signal communication with the temperature sensor (35) and operatively disposed to receive signals from the temperature sensor (35), the controller operatively configured to control the regulator associated with the one or more cooling gas injection ports (32) for injecting cooling gas between the two adjacent journal bearing pads (23) responsive to the signals from the temperature sensor (35).

10. The bearing assembly as claimed in any one of claims 1 to 9
wherein the bearing shell (11) comprises one or more cooling gas injection ports (19) for injecting cooling gas between two adjacent thrust bearing pads (12) of the plurality of at least three thrust bearing pads (12).

11. The bearing assembly according to claim 10 further comprising:
a regulator associated with the one or more cooling gas injection ports (19) for injecting cooling gas between the two adjacent thrust bearing pads (12) for flow and/or pressure control of cooling gas injected between the two adjacent thrust bearing pads (12);
a temperature sensor (22) operatively disposed to sense a temperature associated with one or more of the plurality of at least three thrust bearing pads (12); and
at least one of:
(i) a display in signal communication with the temperature sensor (22), the display operatively disposed to receive signals from the temperature sensor (22) and display values representative of the temperature associated with the one or more of the plurality of at least three thrust bearing pads (12) responsive to the signals from the temperature sensor (22); or
(ii) a controller in signal communication with the temperature sensor (22) and operatively disposed to receive signals from the temperature sensor (22), the controller operatively configured to control the regulator associated with the one or more cooling gas injection ports (19) for injecting cooling gas between the two adjacent thrust bearing pads (12) responsive to the signals from the temperature sensor (22).

12. The bearing assembly according to claim 8 further comprising:
one or more cooling gas injection ports for injecting a second cooling gas between two adjacent thrust bearing pads of the plurality of at least three thrust bearing pads.

13. The bearing assembly according to claim 12 further comprising:
a first regulator associated with the one or more cooling gas injection ports for injecting cooling gas between the two adjacent journal bearing pads for flow and/or pressure control of cooling gas injected between the two adjacent journal bearing pads; and
a second regulator associated with the one or more cooling gas injection ports for injecting the second cooling gas between the two adjacent thrust bearing pads for flow and/or pressure control of cooling gas injected between the two adjacent thrust bearing pads,
wherein the first regulator associated with the one or more cooling gas injection ports for injecting cooling gas and the second flow regulator associated with the one or more cooling gas injection ports for injecting the second cooling gas are configured to provide independent control of the flow and/or pressure of cooling gas and the second cooling gas.

14. The bearing assembly according to any one of claims 1 to 13 further comprising
a compliant member disposed between the bearing shell-facing side of each of the plurality of at least three thrust bearing pads and the bearing shell wherein the compliant member is preferably a bump foil.

15. The bearing assembly according to any one of claims 1 to 14 further comprising
a compliant member disposed between the bearing shell-facing side of each of the plurality of at least three journal bearing pads and the bearing shell wherein the compliant member is preferably a bump foil.
